(19) Europäisches Patentamt
European Patent Office
Office européen des brevets

(11) Publication number: 0 212 019 B1

# (12) EUROPEAN PATENT SPECIFICATION

(45) Date of publication of the patent specification: 15.03.89

(51) Int. Cl.⁴: **E21B 43/02**, E21B 43/25, E21B 43/27

(21) Application number: 85305807.1

(22) Date of filing: 15.08.85

(54) **Method of stabilizing fines.**

(43) Date of publication of application: 04.03.87 Bulletin 87/10

(45) Publication of the grant of the patent: 15.03.89 Bulletin 89/11

(84) Designated Contracting States: AT DE FR GB IT NL SE

(56) References cited:
EP-A- 0 082 657
EP-A- 0 120 592
GB-A- 2 110 744
US-A- 4 055 502

(73) Proprietor: HALLIBURTON COMPANY, P.O. Drawer 1431, Duncan Oklahoma 73536(US)

(72) Inventor: Borchardt, John Keith, 8010 Vista Del Sol, Houston, TX 77083(US)

(74) Representative: Wain, Christopher Paul et al, A.A. THORNTON & CO. Northumberland House 303-306 High Holborn, London WC1V 7LE(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

EP 0 212 019 B1

## Description

This invention relates to a method of treating a permeable structure, such as a subterranean formation, using water-soluble organic copolymers in order to stabilize, in the structure, migrating fines such as silica, iron minerals, and alkaline earth metal carbonates.

The recovery of fluids such as oil or gas or combinations thereof has been troublesome in areas where the subterranean formation is composed of one or more layers or zones which contain migrating fines such as silica, iron minerals, and alkaline earth metal carbonates. These fines tend to move or migrate to a well bore during the recovery of formation fluids from the particular layers or zones, and frequently block the passageways leading to the well bore. The movement or migration of fines to the well bore is a particular problem when the fines are contacted with water foreign to the formation. Plugging or materially impairing the flow of the formation fluids towards the well bore results in a loss of these fluids to the producer, and decreases the rate of hydrocarbon recovery from the well which may cause the well to be shut down because it is economically unattractive to produce therefrom. An additional adverse factor resulting from the movement of the fines towards the well bore is that they are often carried along with the formation fluids to the well bore and pass through pipes, pumps, etc., being used to recover the formation fluids to the surface with resulting damage to the moving parts thereof as the fines are very abrasive.

Secondary and tertiary methods of recovering hydrocarbons from a subterranean formation are well known. In general, such a method involves introducing a fluid, such as water, steam etc., into one or more injection wells which penetrate the formation, and forcing the fluid toward one or more offset producing wells. Migrating fines particles during such an operation can decrease the permeability of the formation which may cause a decrease in the rate in which fluid can be injected into the formation which results in a decrease in the rate of hydrocarbon production at the offset production wells.

Migrating fines are frequently encountered during acidizing or fracturing operations and during sand consolidation operations. The presence of the fine particles during these operations can result in a decrease in the permeability of the formation which is being treated.

Gravel packing is a widely practiced method of preventing the production of sand from poorly consolidated formations. The migration of fine particles into the gravel pack can greatly reduce the permeability of the gravel pack, which can result in a decrease in the rate of production of hydrocarbons from the formation.

Consequently, in efforts to overcome these problems, various methods have been developed for treating a subterranean formation in order to stabilize portions of the formation containing migrating fines. For instance, U.S. Patent Nos. 4 366 071; 4 366 072; 4 366 073; 4 366 074; 4 374 739; and 4 460 483 disclose the use of organic polycationic polymers to prevent or reduce the ill effects of swelling clays or migrating fines in subterranean formations.

We have now devised a method of stabilizing fines within a permeable structure such as a subterranean formation using organic polymers which are effective in reducing the migration of fine particles in the permeable structure. The copolymers can be either nonionic in a neutral medium or can contain up to 95% be weight of a quaternary ammonium salt monomer. The method of the present invention involves the use of organic copolymers to prevent or reduce the ill effects of migrating fines in a permeable structure such as a permeable earthen formation penetrated by a well bore. The method is carried out by contacting the fines in the permeable structure with an effective amount of certain organic copolymers.

The copolymers which are used in the present invention contain two (binary copolymers) or three (ternary copolymers) different repeating monomer units and are random in nature. That is, the distribution of the repeating monomer units is determined by the concentration and relative reactivity of the monomers which form the repeating monomer units. The monomer units are linked together in a random sequence along the copolymer chain.

The organic copolymers used in the method of the invention are very effective in treating migrating fines such as silica, iron minerals such as hematite, magnetite, lepidocrocite, wuestite, akaganeite, and siderite, and alkaline earth metal carbonates such as calcite and dolomite. The organic copolymers are particularly effective when used to treat permeable structures which contain about 4% by weight migrating fines in the mass of the structure and less than 2% by weight swelling clays. In addition, the copolymers are particularly effective when used in conjunction with an acidizing operation that utilizes a strong mineral acid such as 15 percent by weight hydrochloric acid or mixtures of 3 percent by weight hydrofluoric acid and 12 percent by weight hydrochloric acid. A treatment with the organic copolymers of the present invention is essentially permanent and the copolymers are very resistant to being removed by brines, oils, or acids. Formations exhibit high permeability retention after the formation has been treated with the organic copolymers. Furthermore, the copolymers are very effective over a wide range of temperatures and are particularly effective from about 90°F to about 200°F, (32°C to 93°). No well shut-in time is required when the organic copolymers are used to carry out the method of the invention.

The present invention involves the use of organic copolymers to prevent the migration of fines contained in a permeable structure such as a subterranean formation. The use of the method of the invention results in stabilizing the permeable structure. These fines may or may not be present with clay materials. Preferably, fines are present in the permeable structure in an amount of about 4% by weight of the

structure and the clays are present in an amount of less than about 2% by weight of the structure. The organic copolymers which are suitable for use in accordance with this invention have recurring structural units formed in a random fashion of the formula:

FORMULA A

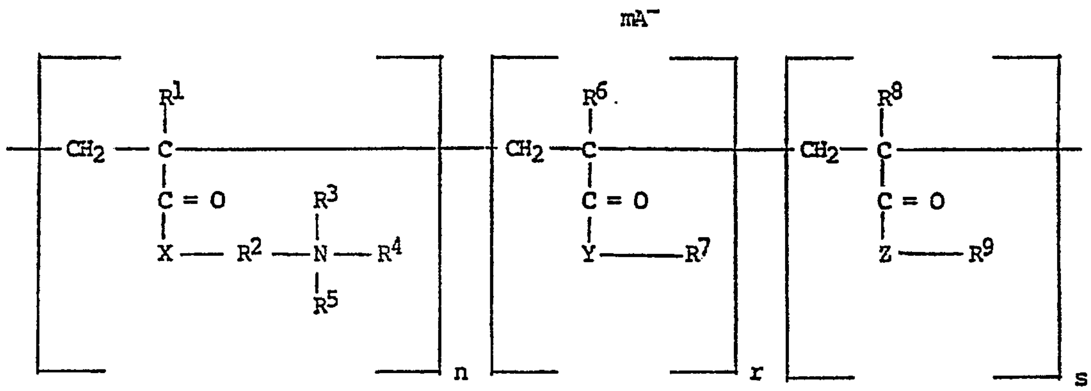

I II III

wherein

X is selected from the group consisting of oxygen and NH;

$R^1$, $R^6$, and $R^8$ are independently selected from the group consisting of hydrogen and methyl;

$R^2$ is an alkylene group having 1 to about 4 carbon atoms;

$R^3$ and $R^5$ are independently selected from the group consisting of methyl and ethyl;

$R^4$ is optionally present and when present is selected from the group consisting of:

(1) an alkyl group having from 1 to about 6 carbon atoms; and

(2) a quaternary ammonium group having the general formula:

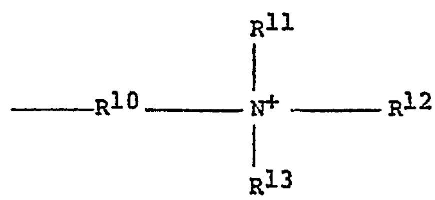

wherein

$R^{10}$ is selected from the group consisting of an alkylene group having from about 2 to about 6 carbon atoms and a substitute alkylene group having from about 2 to about 6 carbon atoms and containing a hydroxyl group or from 1 to about 3 ether groups;

$R^{11}$, $R^{12}$ and $R^{13}$ are independently selected from the group consisting of methyl and ethyl;

Y is selected from the group consisting of oxygen and $NR^{16}$ wherein $R^{16}$ is selected from the group consisting of hydrogen, methyl and ethyl;

$R^7$ is selected from the group consisting of an alkyl group having from 1 to about 3 carbon atoms; and

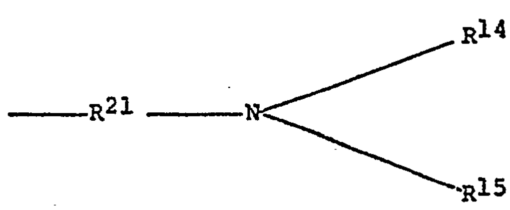

wherein

$R^{14}$ and $R^{15}$ are independently selected from the group consisting of methyl and ethyl; and

$R^{21}$ is selected from the group consisting of methylene, ethylene, and trimethylene;

$R^9$ is selected from the group consisting of hydrogen, an alkyl group containing 1 to about 4 carbon atoms, a substituted alkyl group having from 1 to about 4 carbon atoms and containing a hydroxyl group, a carboxyl group, or $-SO_3J$ wherein J is selected from the group consisting of hydrogen, sodium and potassium, and

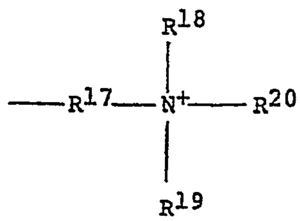

wherein

$R^{17}$ is selected from the group consisting of methylene, ethylene and trimethylene; and

$R^{18}$, $R^{19}$ and $R^{20}$ are independently selected from the group consisting of methyl and ethyl;

Z is selected from the group consisting of oxygen and NH and provided further when Z is oxygen, $R^9$ may further be selected from the group consisting of sodium and potassium; and,

A is an anion selected from the group consisting of chloride, bromide, iodide, methyl sulfate, and sulfate;

m is an integer equal to the number of anions required to maintain electronic neutrality;

n, r and s are integers the sum of which equals the total number of monomer units in the copolymer required to give a molecular weight in the range of from about 50,000 to about 1,000,000; and,

monomer unit I is present in the range of from about 25 to about 95 mole percent of the copolymer;

monomer unit II is present in the range of from about 5 to about 75 mole percent of the copolymer; and,

monomer unit III is present in the range of from about 0 to about 35 mole percent of the copolymer.

A preferred organic copolymer of Formula A which is nonionic in character comprises an organic copolymer having recurring structure units formed in a random fashion of the formula:

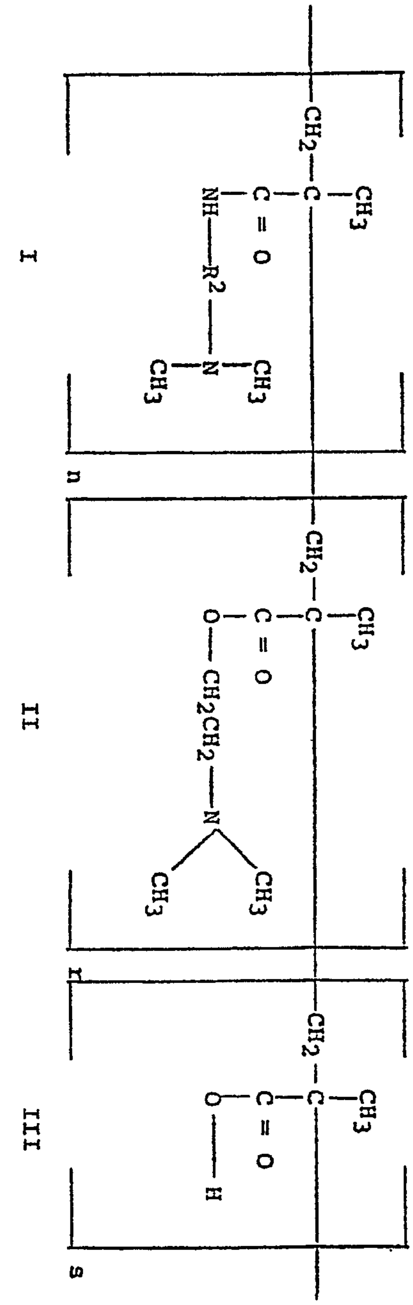

FORMULA B

wherein

$R^2$ is selected from the group consisting of ethylene and methylene.

A preferred polycationic organic copolymer of Formula A comprises an organic copolymer having recurring structural units formed in a random fashion of the formula:

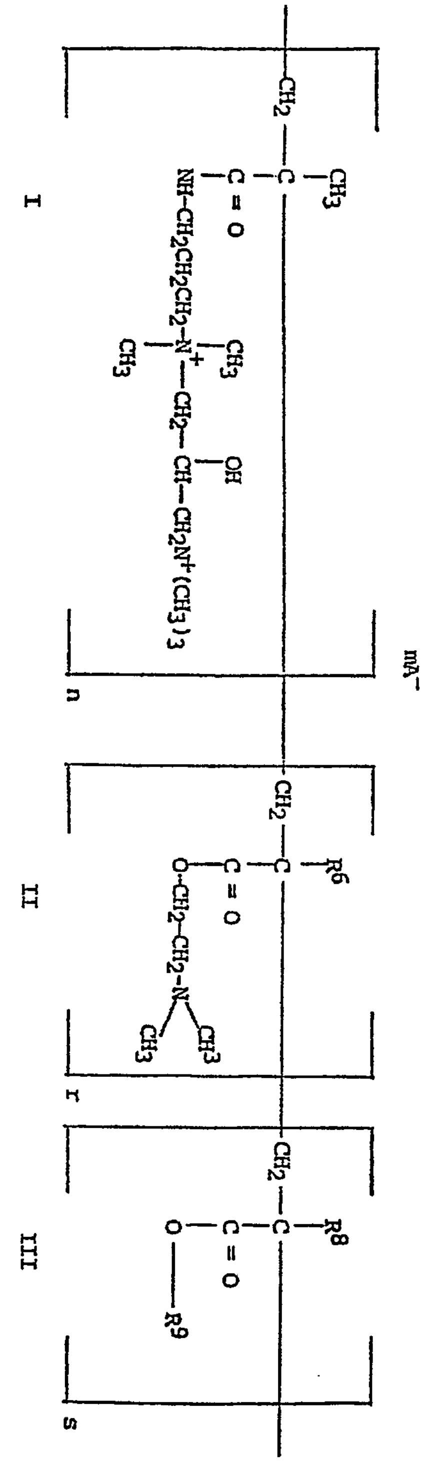

FORMULA C

wherein

$R^6$ and $R^8$ are independently selected from the group consisting of hydrogen and methyl;

$R^9$ is selected from the group consisting of hydrogen and sodium;

A is selected from the group consisting of chloride, bromide, iodide, methyl sulfate and sulfate; and,

m is an integer equal to the number of anions required to maintain electronic neutrality.

The organic copolymers of the present invention can be used to treat both natural and artificial structures which are permeable, including poorly consolidated and unconsolidated rocks. The method of the invention is particularly suited for stabilizing fine particles having a diameter of less than 10 microns. Furthermore, there is a wide range of applications for the organic copolymers. These applications involve using the organic copolymers alone as the primary treating agent, or as an auxiliary in other treatments.

Examples of monomer unit I which are suitable in the method of the present invention include dimethylaminoethyl methacrylate, the methyl chloride salt of dimethylaminoethyl methacrylate, and methacrylamido-4,4,8,8-tetramethyl-4,8-diaza-6-hydroxynonamethylene dichloride (MDTHD).

Monomer unit I is preferably present in the copolymer in an amount of from about 60 to about 80 mole percent of the copolymer and most preferably is present in an amount of about 70 mole percent.

Examples of monomer unit II which are suitable in the method of the present invention include dimethylaminoethyl methacrylate, dimethylaminopropyl methacrylamide, dimethylamidopropyl methacrylamide, and dimethyl acrylamide.

Monomer unit II is preferably present in the copolymer in an amount of from about 25 to about 35 mole percent of the copolymer and most preferably is present in an amount of about 30 mole percent.

Examples of monomer unit III which are suitable in the method of the present invention include methacrylic acid and 2-acrylamido-2-methylpropane sulfonic acid.

Monomer unit III is preferably present in the copolymer in an amount of from about 0 to about 10 mole percent of the copolymer and most preferably is present in an amount of about 3 mole percent.

Examples of particularly preferred binary copolymers which are suitable for use in the present invention include copolymers containing the following monomer units.

FORMULA D

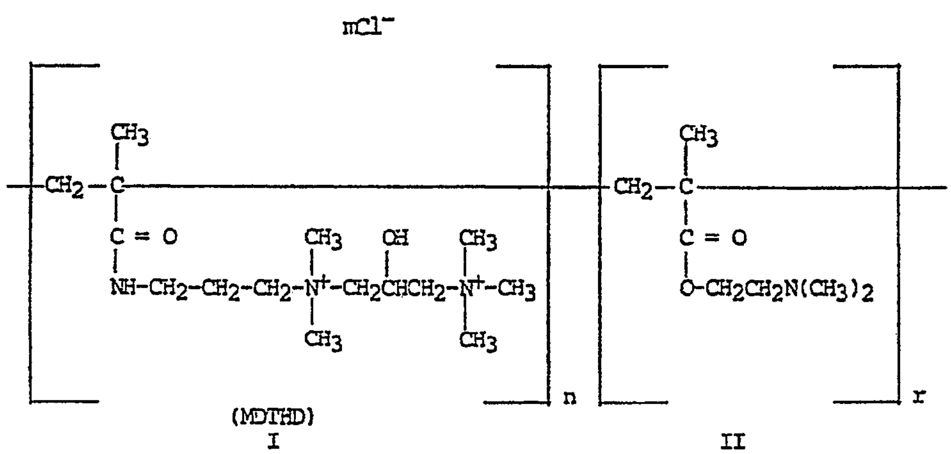

(MDTHD)
I

II

In formula D, monomer unit I is preferably present in an amount of about 66.7 mole percent of the copolymer and monomer unit II is preferably present in an amount of about 33.3 mole percent of the copolymer.

FORMULA E

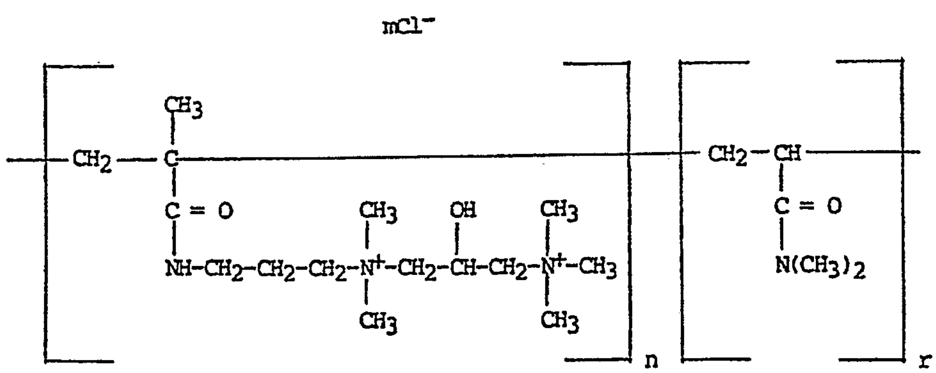

I

II

In formula E, monomer unit I is preferably present in an amount of about 66.7 mole percent of the copolymer and monomer unit II is preferably present in an amount of about 33.3 mole percent of the copolymer.

FORMULA F

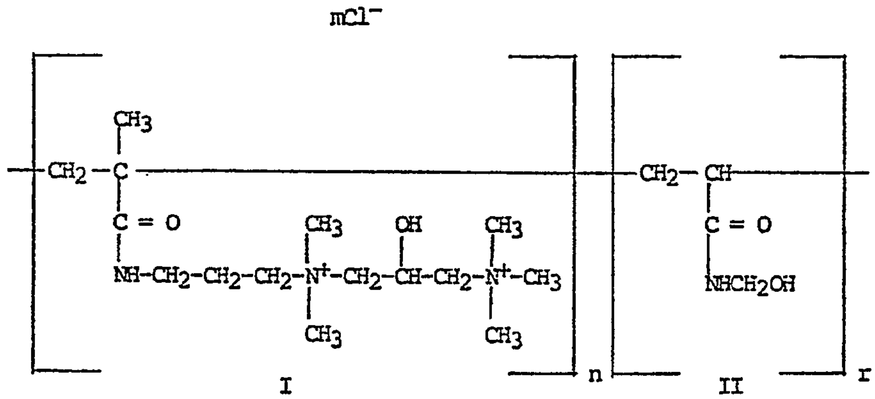

In formula F, monomer unit I is preferably present in an amount of about 90.0 mole percent of the copolymer and monomer unit II is preferably present in an amount of about 10.0 mole percent of the copolymer.

FORMULA G

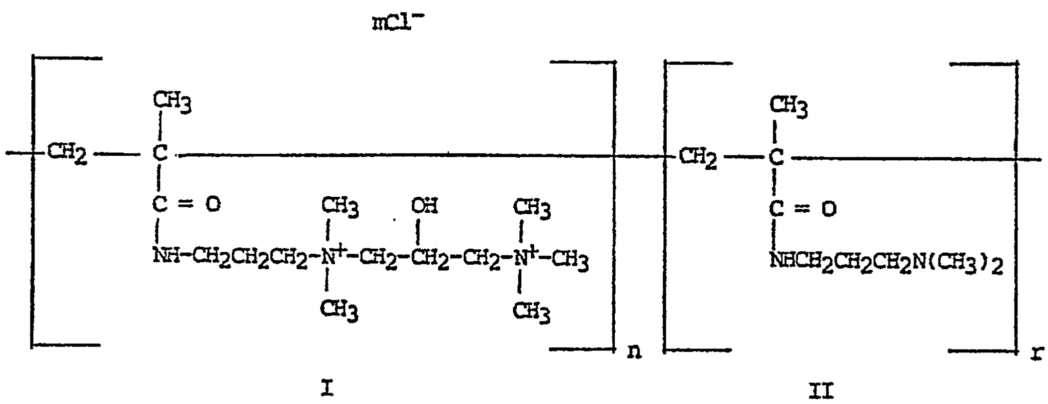

In formula G, monomer unit I is preferably present in an amount of from about 95 mole percent to about 70 mole percent of the copolymer and monomer unit II is preferably present in an amount of from about 30 mole percent to about 5 mole percent of the copolymer.

FORMULA H

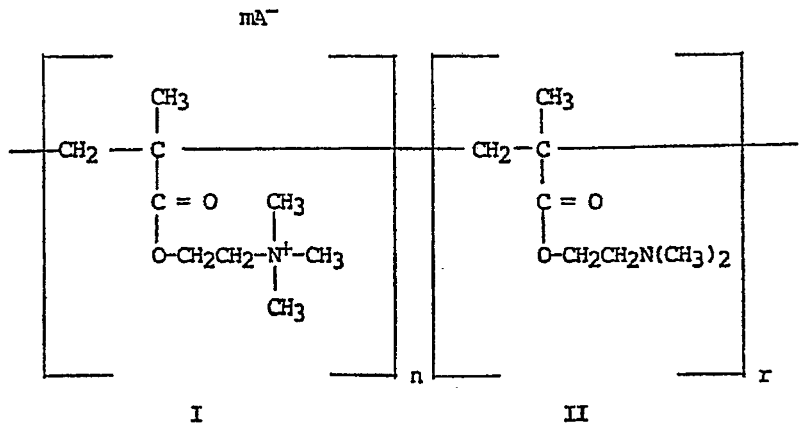

wherein

A is chloride or methyl sulfate.

In formule H, monomer unit I is preferably present in an amount of from about 75 mole percent to about 25 mole percent of the copolymer and monomer unit II is preferably present in an amount of from about 25 mole percent to about 75 mole percent of the copolymer.

Examples of particularly preferred ternary copolymers which are suitable for use in the method of the present invention include copolymers containing the following monomer units:

FORMULA J

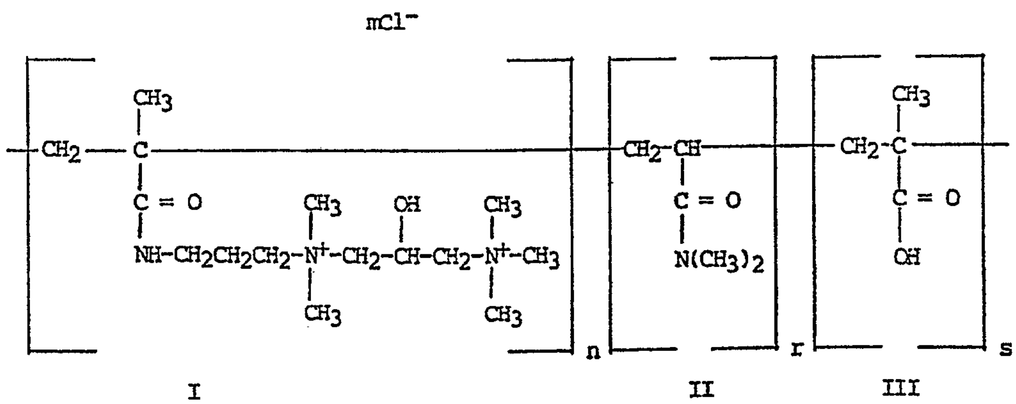

In formula J, monomer unit I is preferably present in an amount of from about 32.3 mole percent to about 64.5 mole percent of the copolymer, monomer unit II is preferably present in an amount of from about 32.3 mole percent to about 64.5 mole percent of the copolymer, and monomer unit III is preferably present in an amount of about 3.2 mole percent of the copolymer.

FORMULA K

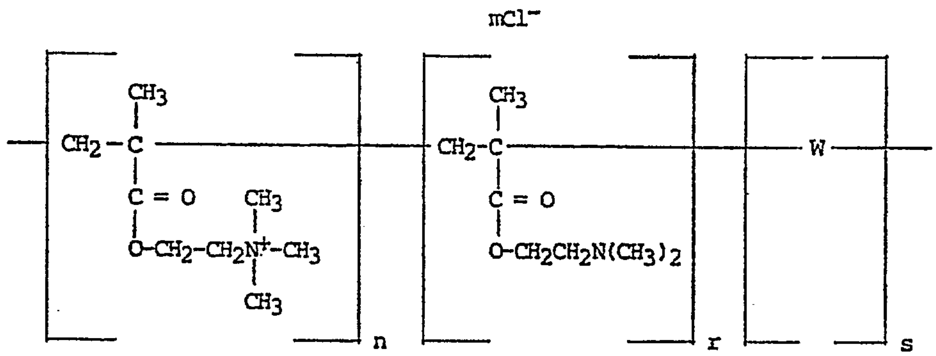

I II III

In formula K, monomer unit I and monomer unit II are each preferably present in an amount of about 45.45 mole percent of the copolymer and monomer unit III is preferably present in an amount of 9.1 mole percent of the copolymer and W is

III(a)

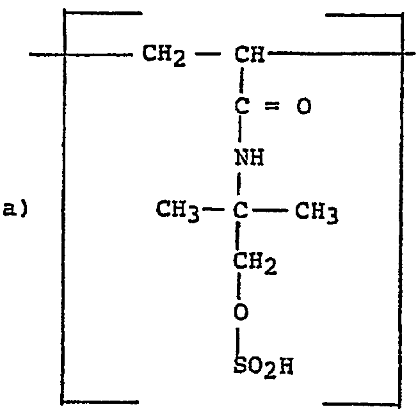

or

III(b)

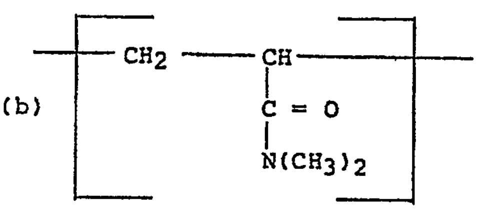

or

III(c)

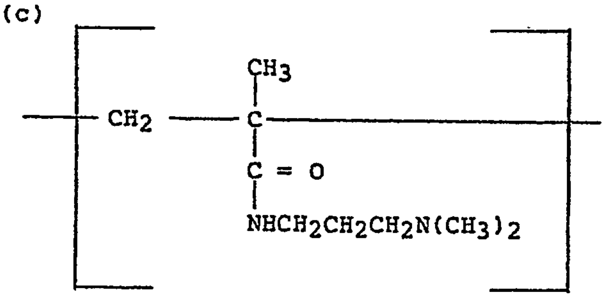

When monomer unit III is III(c) the molar percentages of monomer units I, II and III are preferably each about 33.3 mole percent of the copolymer.

An example or a ternary copolymer containing two (2) different quaternary ammonium salt monomer units which is contemplated for use in the method of the present invention comprises a copolymer containing the following monomer units:

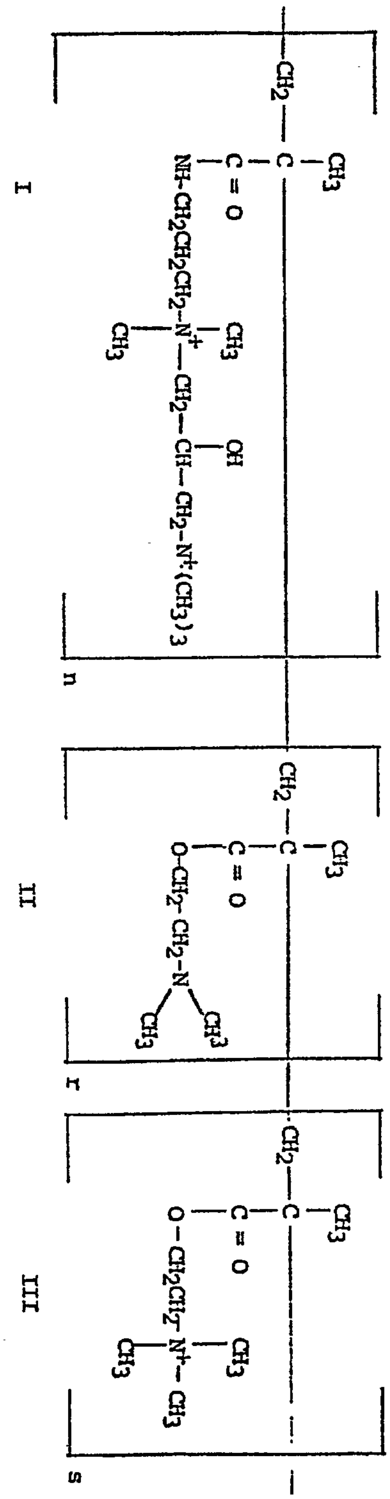

FORMULA L

The most preferred copolymer for use in accordance with the present invention comprises a copolymer having the following formula:

FORMULA M

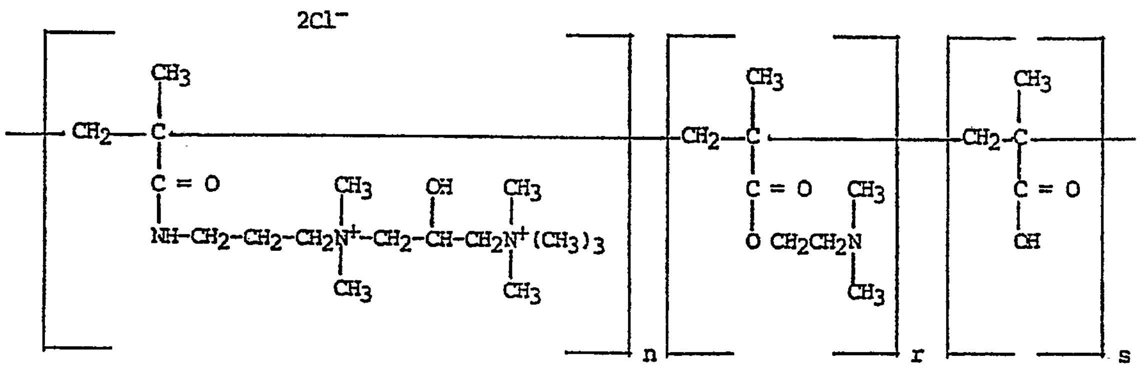

In formula L, monomer unit I, which is known as methacrylamidopropyl-4,8-diaza-4,4,8,8-tetramethyl-6-hydroxynonamethylene dichloride (MDTHD), is preferably present in an amount of about 70 mole percent of the copolymer; monomer unit II, which is known as dimethylaminoethyl methacrylate, is preferably present in an amount of about 27 mole percent of the copolymer; and monomer unit III which is known as methacrylic acid is preferably present in an amount of about 3 mole percent of the copolymer.

In formulae D through M, m, n, r, s and A have the same meaning as they hold in formula A above.

The organic copolymers of the present invention should have a molecular weight of from about 50,000 to about 1,000,000. Preferably, the organic copolymers have a molecular weight of about 100,000 to about 400,000 and most preferably about 200,000. The molecular weight of the organic copolymers used in the method of the present invention will vary over a wide range depending upon the permeability of the formation to be treated and the copolymer used in the method of the invention. An anion selected from the group consisting of chloride, bromide, iodide, methyl sulfate and sulfate is present when the organic copolymer is cationic such as when monomer unit I or monomer unit III or monomer units I and III of the copolymer contain one or more quaternary amine groups and the anion is present in an amount sufficient to maintain electronic neutrality.

The amount of organic copolymer employed in the method of the present invention will vary according to, for example, the size and porosity of the particular formation and the types of fines present. Therefore, there are no upper or lower limits in this regard.

Any suitable method of application can be used to carry out the method of the invention. For some applications such as surface or exposed structures, it may be desirable to merely spray the polymer onto the permeable mass. The essential feature is contact between the fines to be treated and the organic copolymer.

When a carrier fluid is used to carry out the method of the invention, the organic copolymers will generally be present in the carrier fluid in a concentration within the range of from about 0.01% to about 5.0% by weight of the carrier fluid. Lower or higher concentrations can be used, but are not generally as practical. When a carrier fluid is used, the preferred concentration of the organic copolymers is in the range of from about 0.25 to about 1.00 percent by weight of the carrier fluid.

Carrier fluids which can be used to carry out the method of the present invention include polar and non-polar fluids. Examples of suitable fluids include water, brine, aqueous mixtures of low molecular weight alcohols, ketones, and monoethers of glycol. Examples of suitable low molecular weight alcohols include methanol, ethanol, and isopropanol. When water is used as the carrier fluid, the carrier fluid can contain other ingredients which do not substantially interfere with the dispersion or dissolution of the organic copolymer in the carrier fluid. Furthermore, the water can be gelled or thickened for certain applications. Examples of ingredients which can be included in the water include salts, mineral acids, low molecular weight organic acids, cationic or nonionic surfactants, and wetting agents. When the copolymer used in the method of the present invention does not contain a cationic monomer unit, the water may also contain an anionic surfactant as the copolymer has an electrical charge which is nonreactive with the electronic charge of the anionic surfactant. Preferably the carrier fluid has a viscosity of less than 10 centipoises. Higher viscosity fluids may be used in certain applications but are not generally very practical due to the pressure and pumping requirements. A preferred aqueous carrier fluid is a saline solution containing about 0.1 to about 40.0 percent by weight of salt. The preferred salt concentration is about 2 to 12 percent by weight of the solution. The salt can be an alkali metal salt, alkaline earth metal salt, an ammonium salt or mixtures thereof. Suitable anions include halides, such as chloride, bromide, and iodide, sulfates, carbonates, hydroxides, or mixtures thereof. The halides of potassium, sodium, magnesium, calcium, and ammonium and mixtures thereof are preferred due to the economics and solubility. Aqueous

acids having a concentration of about 0.1 to about 40.0 percent by weight of the solution can also be utilized in carrying out the method of the invention. Examples of suitable acids include hydrochloric acid, hydrofluoric acid, phosphoric acid, acetic acid, formic acid, citric acid and mixtures thereof. The preferred acids include about 3 to about 15 percent by weight of hydrochloric acid and a mixture of about 3% by weight hydrofluoric acid and about 12% by weight of hydrochloric acid.

The method of the present invention can be used in a number of operations. For instance, the method of the present invention can be used in conjunction with sand consolidation procedures, gravel packing procedures, secondary recovery operations and acidizing or fracturing operations. In these operations, the organic copolymers can be used to prevent or reduce the migration of fines in the subterranean formation. This results in a greater permeability in the formation and a greater permeability increase during acidizing or fracturing operations. The present invention is further exemplified by the examples below which are presented to illustrate certain specific embodiments of this invention, but are not intended to be construed so as to be restrictive of the spirit and scope thereof.

## IV. EXAMPLES

A number of tests were perfomed to evaluate the effectiveness of various copolymers as fine stabilizers. The following monomer unit abbreviations are used herein:

Table I

| Momomer Unit | Abbreviation |
|---|---|
| methacrylamidopropyl-4,8-diaza-4,4,8,8-tetramethyl-6-hydroxy-nonamethylene dichloride | MDTHD |
| dimethylaminoethyl methacrylate | DMAEMA |
| methyl chloride salt of dimethyl-aminoethyl methacrylate | DMAEMA $CH_3Cl$ |
| N,N-dimethylacrylamide | NNDMAm |
| dimethylaminopropyl methacrylamide | DMAPMA |
| N-hydroxymethylacrylamide | NHMAm |
| 2-acrylamido-2-methylpropane-sulfonic acid | AMPSA |
| methacrylamidopropyltrimethylammonium chloride | MAPTAC |

The following copolymers were utilized in the tests:

Table II

| Copolymer | Copolymer Designation |
|---|---|
| 33.3 mole percent MDTHD/66.7 mole percent NNDMAm, treatment fluid viscosity 1.6 cps | A |
| 66.7 mole percent MDTHD/33.3 mole percent NNDMAm, treatment fluid viscosity 1.9 cps | B |
| 66.7 mole percent MDTHD/33.3 mole percent , NNDMAm, treatment fluid viscosity 2.2 cps | C |
| 90.0 mole percent MDTHD/10.0 mole percent NHMAm | D |
| 66.7 mole percent MDTHD/33.3 mole percent DMAEMA | E |
| 50.0 mole percent MDTHD/50.0 mole percent DMAEMA, treatment fluid viscosity 2.6 cps | F |
| 33.3 mole percent MDTHD/66.7 mole percent DMAEMA, treatment fluid viscosity 1.7 cps | G |
| 70.0 mole percent MDTHD/30.0 mole percent DMAPMA | H |
| 85–90 mole percent MDTHD/10–15 mole percent DMAPMA | I |
| 90.0 mole percent MTDHD/10.0 mole percent DMAPMA | J |
| 95.0 mole percent MDTHD/5.0 mole percent DMAPMA | K |
| 75.0 mole percent DMAEMA · $CH_3Cl$/25.0 mole percent DMAEMA, treatment fluid viscosity 2.6 cps | L |
| 50.0 mole percent DMAEMA · $CH_3Cl$/50.0 mole percent DMAEMA, treatment fluid viscosity 2.6 cps | M |
| 50.0 mole percent DMAEMA · $CH_3Cl$/50.0 mole percent DMAEMA, treatment fluid viscosity 5.1 cps | N |
| 25.0 mole percent DMAEMA · $CH_3Cl$/75.0 mole percent DMAEMA, treatment fluid viscosity 2.6 cps | O |
| 10.0 mole percent DMAEMA · $CH_3Cl$/90.0 mole percent DMAEMA, treatment fluid viscosity 2.7 cps | P |
| 28.6 mole percent DMAEMA · $(CH_3)_2SO_4$/71.4 mole percent DMAEMA | Q |
| 45.5 mole percent DMAEMA · $CH_3Cl$/45.5 mole percent DMAEMA/9.0 AMPSA, treatment fluid viscosity 1.9 cps | R |
| 45.5 mole percent DMAEMA · $CH_3Cl$/45.5 mole percent DMAEMA/9.0 mole percent NNDMAm, treatment fluid viscosity 2.0 cps | S |
| 45.5 mole percent DMAEMA · $CH_3Cl$/45.5 mole percent DMAEMA/9.0 mole percent MAPTAC, treatment fluid viscosity 2.0 cps | T |
| 33.3 mole percent DMAEMA · $CH_3Cl$/33.3 mole percent DMAEMA/33.33 mole percent MAPTAC, treatment fluid viscosity 1.8 cps | U |

Treatment fluid viscosity was measured using a Brookfield Model LVT viscometer using a UL adapter at 30 rpms. The copolymer solvent was aqueous two percent (by weight) ammonium chloride. The temperature at the time of the measurement was 74°F (23°C).

The molecular weight of the copolymers used in the tests was in the range of from about 50,000 to about 1,000,000.

EXAMPLE I

A. Test Equipment and Procedure

The test equipment used in the tests of Example I was a TEFLON sleeved test chamber having a diameter of about 2.5 cm at the bottom of the chamber and a diameter of about 2.6 cm at the top of the chamber. The chamber design insured that, under modest applied pressure, fluid injected during the test would flow through the test sand rather than around the test sand. The test sand comprised 100 grams of a mixture of 85 percent by weight 70–170 U.S. mesh sand and 15 percent by weight silica fine particles. The silica fine particles had a median particle diameter of 22.4 microns and surface area of 1.20 $m^2$. A 100 U.S. mesh screen was placed at the base of the chamber to hold the larger particles in place.

The test chamber and fluid reservoir were heated to about 145°F (63°C). The first fluid injected into the top of the chamber during the tests comprised 226 cc of an aqueous solution containting 2 percent by weight of ammonium chloride and 0.25 percent by weight of the copolymer. The injection pressure was 5 psia (34.5 kPa).

Included in these tests were treatments in which no copolymer was added to the fluid. After completion of the injection of the first fluid the injection pressure was increased to 40 psig (276 kPag) and 500 cc of fresh water was injected. The fresh water treatment was optionally followed by an injection at 40 psig (276 kPag) of 400 cc of an aqueous fluid comprising 15 percent by weight of hydrochloric acid and an injection at 40 psig (276 kPag) of 500 cc of fresh water.

The effluent of each treatment was collected and filtered through a tared piece of 0.45 micron filter paper. The solids from the effluent were collected in the filter paper, dried and weighed. The results of these tests are shown in Table III.

Table III

| Test No. | Copolymer used | Silica fines production (% by weight of control experiment) | |
|---|---|---|---|
| | | Before 15% HCl | After 15% HCl |
| 1 | None* | 100.0 | 100.0 |
| 2 | A | 38.1 | 32.4 |
| 3 | B | 42.3 | 35.3 |
| 4 | C | 19.1 | 20.6 |
| 5 | D | 14.3 | 26.4 |
| 6 | E | 23.8 | 23.5 |
| 7 | F | 14.3 | 23.5 |
| 8 | G | 14.3 | 23.5 |
| 9 | H | 9.5 | ** |
| 10 | I | 19.1 | ** |
| 11 | J | 9.5 | ** |
| 12 | K | 9.5 | ** |
| 13 | L | 28.6 | 32.4 |
| 14 | M | 38.1 | 29.4 |
| 15 | N | 23.8 | 35.3 |
| 16 | O | 23.8 | 26.5 |
| 17 | P | 23.8 | 29.4 |
| 18 | Q | 23.8 | ** |
| 19 | R | 42.9 | 38.2 |
| 20 | S | 33.3 | 29.4 |
| 21 | T | 23.8 | 29.4 |
| 22 | U | 33.3 | 29.5 |

* Control Experiment
** Tests Not Performed

Test No. 1 was a control experiment to determine the amount of silica fines produced in the absence of any copolymer. An amount of 0.21 g of fines was produced during the injection of 500 cc of fresh water and a total of 0.34 g of fines were produced after injection of the 15% hydrochloric acid and followed by fresh water. These amounts were defined, for calculations purposes, as 100% fines production.

From Table III, it can be seen that the binary and ternary copolymers used in the method of the present invention are very effective as silica fine stabilizers even after exposure of the copolymer to an aqueous 15 percent by weight hydrochloric acid solution.

EXAMPLE II

A series of tests were performed in the same manner as Example I except the copolymers were evaluated as fine stabilizers for calcite and hematite. The calcite had a median particle diameter of 8.9 microns and a surface area of 10.98 $m^2$. The hematite had a median particle diameter of 4.4 microns and a surface area of 6.44 $m^2$. The results of these tests are shown in Table IV.

Table IV

| Test No. | Copolymer used | Fines production (% of control experiment) | |
|---|---|---|---|
| | | Calcite | Hematite |
| 1 | None* | 100.0 | 100.0 |
| 2 | A | 77.8 | 88.9 |
| 3 | B | ** | 72.2 |
| 4 | E | ** | 100.0 |
| 5 | G | ** | 94.4 |
| 6 | H | 37.2 | 57.1 |
| 7 | L | 114.6 | 100.0 |
| 8 | O | 81.1 | 77.8 |
| 9 | R | ** | 100.0 |
| 10 | S | ** | 85.7 |

* Control Experiment
** Tests Not Performed

The results of the tests reported in Table IV show that the copolymers, with the exception of copolymer L, were effective in reducing the production of fines from a test column containing 15 percent by weight calcite fine particles.

The results of the tests also show that the copolymers, with the exception of copolymers L, E and R, were effective hematite fines stabilizers.

The reason the results of these tests showed that copolymer L did not reduce calcite fine production and compolymers L, E and R did not reduce hematite fine production is not understood.

Although the standard tests procedures were used in evaluating copolymer L as a calcite fines stabilizer and copolymer L, E and R as a hematite fines stabilizer, it is possible that the results observed were due to procedure problems in performing these experiments. Potential procedure problems include: increasing the injection pressure from 5 psia to 40 psig (276 kPag) too rapidly causing pressure surges which disturbed the sand pack in turn causing additional fines migration over what was observed in the controlled tests; temporarily increasing the injection pressure above 40 psig (276 kPag); difficulties in packing the test columns; and a hole in the 100 U.S. mesh screen allowing additional solids to pass through the screen.

EXAMPLE III

A series of tests were performed in the same manner as Example I except that the treatment solvent was a strong acid solution comprising aqueous 15% hydrochloric acid.

The results of these tests are shown in Table V.

Table V

| Test No. | Copolymer used | Silica fines production (% of control experiment) |
|---|---|---|
| 33 | None* | 100.0 |
| 34 | F | 20.7 |
| 35 | G | 27.6 |
| 36 | H | 27.6 |

* Control Experiment

The results in Table V indicate that the copolymers tested were quite effective when the treatment solvent was a strong acid.

**Claims**

1. A method of preventing or reducing the migration of fines in a permeable structure which method comprises contacting said fines in said permeable structure with an effective amount of an organic copolymer having recurring structural monomer units formed in a random fashion of the formula:

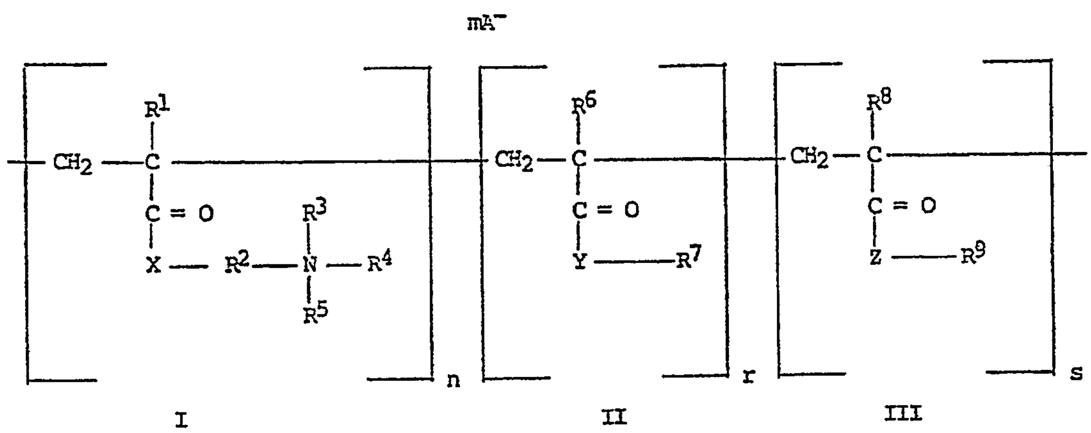

wherein each X is independently oxygen or NH; $R^1$, $R^6$, and $R^8$ are each independently hydrogen or methyl; $R^2$ is an alkylene group having 1 to about 4 carbon atoms; $R^3$ and $R^5$ are each independently methyl or ethyl; $R^4$ is optionally present and, when present is either an alkyl group having from 1 to about 6 carbon atoms, or a quaternary ammonium group having the general formula:

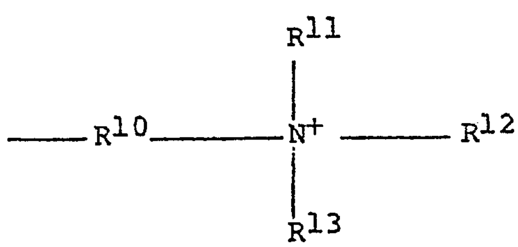

wherein $R^{10}$ is an alkylene group having from about 2 to about 6 carbon atoms or a substituted alkylene group having from about 2 to about 6 carbon atoms and containing a hydroxyl group or from 1 to about 3 ether groups; and $R^{11}$, $R^{12}$, and $R^{13}$ are each independently methyl or ethyl; Y is oxygen or $NR^{16}$ wherein $R^{16}$ is hydrogen, methyl or ethyl; $R^7$ is either an alkyl group having from 1 to about 3 carbon atoms, or is of the formula:

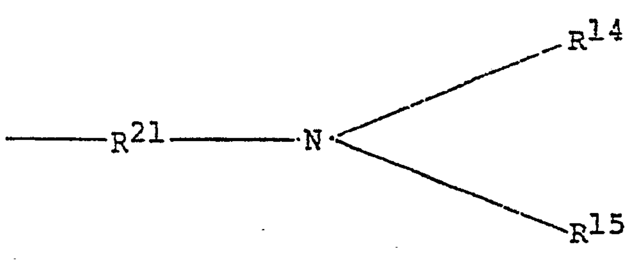

wherein $R^{14}$ and $R^{15}$ are each methyl or ethyl; and $R^{21}$ is methylene, ethylene or trimethylene; $R^9$ is hydrogen, an alkyl group containing 1 to about 4 carbon atoms, a substituted alkyl group having from 1 to about 4 carbon atoms and containing a hydroxyl group, a carboxyl group, or $-SO_3J$ wherein J is hydrogen, sodium, potassium or the group:

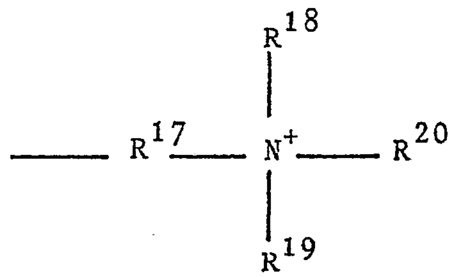

where $R^{17}$ is methylene, ethylene or trimethylene; and, $R^{18}$, $R^{19}$, and $R^{20}$ are each independently methyl or ethyl; Z is oxygen or NH provided that, when Z is oxygen, $R^9$ may further be sodium or potassium; A is a chloride, bromide, iodide, methyl sulfate or sulfate anion; m is an integer equal to the number of anions required to maintain electronic neutrality; n, r, and s are integers, the sum of which equals the total number of monomer units in the copolymer required to give a molecular weight in the range of from about 50,000 to about 1,000,000; and, monomer unit I is present in the range of from about 25 to about 95 mole percent of the copolymer; monomer unit II is present in the range of from about 5 to about 75 mole percent of the copolymer; and monomer unit III is present in the range of from about 0 to about 35 mole percent of the copolymer.

2. A method according to claim 1, wherein said permeable structure is a subterranean formation.

3. A method according to claim 1 or 2, wherein said copolymer is either of the formula:

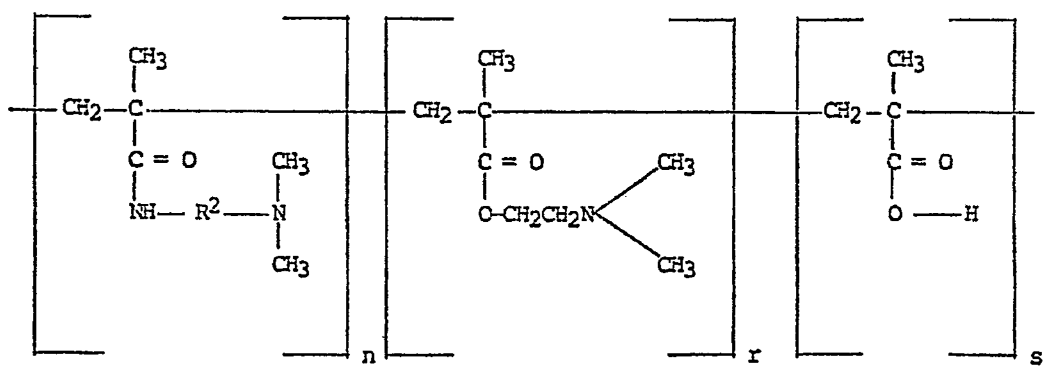

I II III

wherein $R^2$ is ethylene or methylene; and n, r and s are as defined in claim 1; or of the formula:

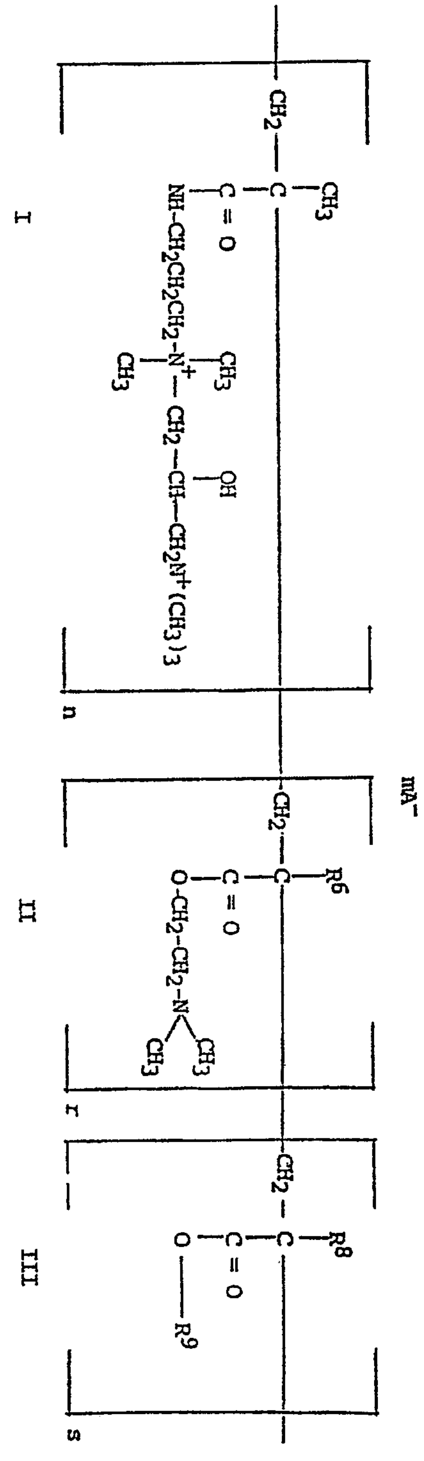

I II III

wherein $R^6$ and $R^8$ are each independently hydrogen or methyl; $R^9$ is hydrogen or sodium; and A, m, n, r and s are as defined in claim 1.

4. A method according to claim 1 or 2, wherein monomer unit I is derived from dimethylaminoethyl methacrylate, the methyl chloride salt of dimethylaminoethyl methacrylate, or methacrylamido-4,8-diaza-4,4,8,8-tetramethyl-6-hydroxynonamethylene dichloride.

5. A method according to claim 1, 2 or 4, wherein monomer unit II is derived from dimethylaminoethyl methacrylate, dimethylaminopropyl methacrylamide, dimethylamidopropyl methacrylamide, or dimethylacrylamide.

6. A method according to claim 1, 2, 4 or 5, wherein monomer unit III is derived from methacrylic acid or 2-acrylamido-2-methylpropane sulfonic acid.

7. A method according to claim 1 or 2, wherein organic copolymer has the formula:

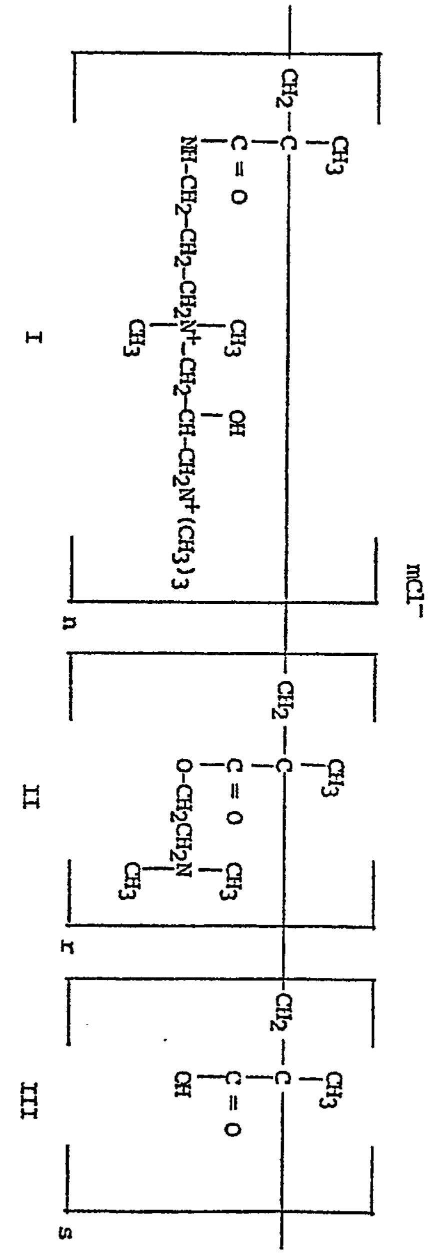

or

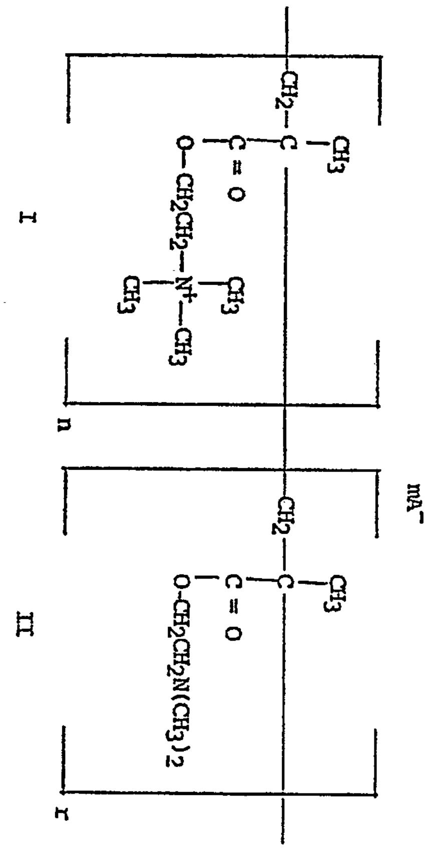

wherein A is chloride or methyl sulfate; or

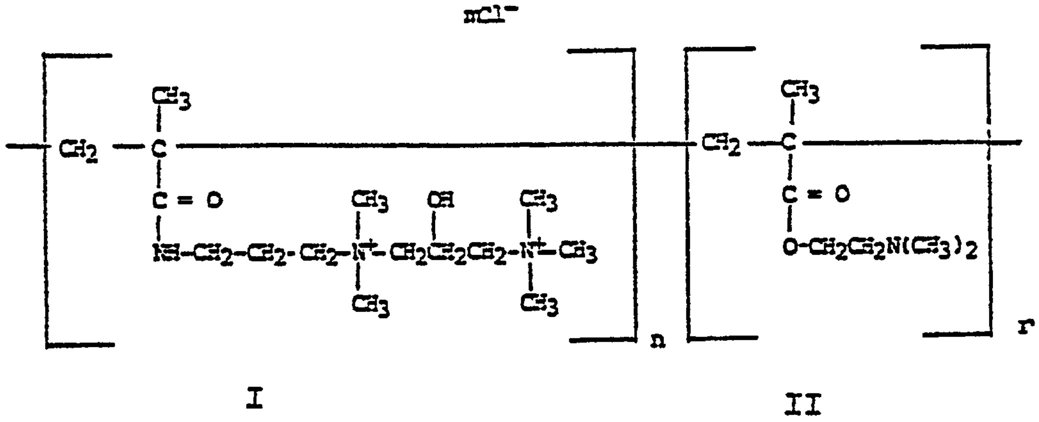

n, p and s is the formulae being as defined in claim 1; or any mixture of two or more thereof.

8. A method according to any of claims 1 to 6, wherein said molecular weight is in the range of from about 100,000, to about 400,000, and monomer unit I is present in an amount of about 70 mole percent of the copolymer, monomer unit II is present in an amount of about 27 mole percent of the copolymer and monomer unit III is present in an amount of about 3 mole percent of the copolymer.

9. A method according to any of claims 1 to 8, wherein said copolymer is dispersed in a carrier fluid.

10. A method according to claim 9, wherein said carrier fluid comprises from about 0.1 to about 40.0 percent by weight of one or more salts, selected from alkali metal halides, alkaline earth metal halides, ammonium halides and mixtures thereof; the copolymer being present in said carrier fluid in an amount of from about 0.01 to about 5.0 percent by weight of the carrier fluid.

**Patentansprüche**

1. Verfahren zur Verhinderung oder Verminderung der Wanderung von Feinstoffen in einer durchlässigen Struktur, bei dem die Feinstoffe in der durchlässigen Struktur mit einer wirksamen Menge eines organischen Copolymeren in Berührung gebracht werden, das in statistischer Verteilung strukturelle Repetiereinheiten enthält und folgende Formel hat:

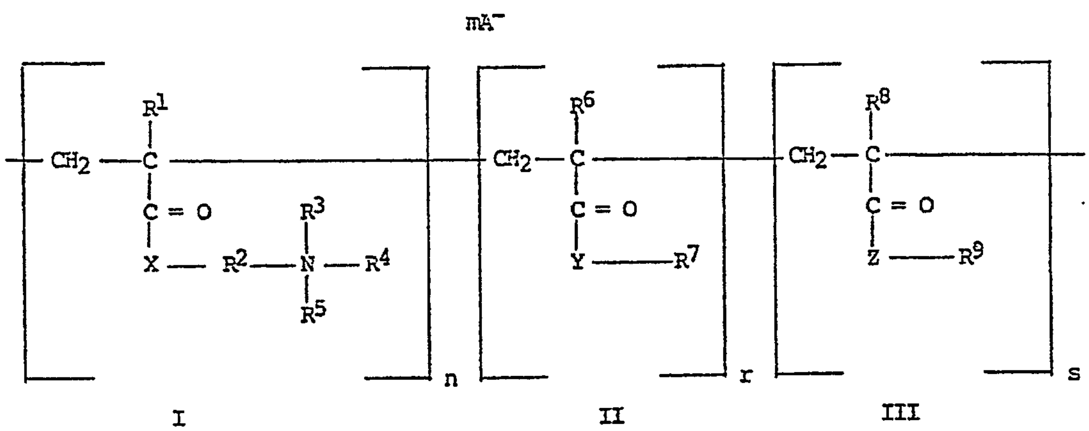

in der jedes X unabhängig voneinander Sauerstoff oder NH ist, $R^1$, $R^6$ und $R^8$ unabhängig voneinander Wasserstoff oder Methyl sind, $R^2$ eine Alkylengruppe mit 1 bis etwa 4 Kohlenstoffatomen ist, $R^3$ und $R^5$ unabhängig voneinander jeweils Methyl oder Ethyl sind, $R^4$ wahlweise vorhanden ist und, falls vorhanden, entweder eine Alkylgruppe mit 1 bis etwa 6 Kohlenstoffatomen oder eine quaternäre Ammoniumgruppe der allgemeinen Formel:

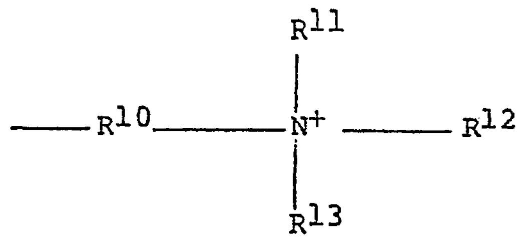

ist, worin $R^{10}$ eine Alkylengruppe mit etwa 2 bis etwa 6 Kohlenstoffatomen oder eine substituierte Alkylengruppe mit etwa 2 bis etwa 6 Kohlenstoffatomen ist, die eine Hydroxylgruppe oder 1 bis etwa 3 Ethergruppen enthält, und $R^{11}$, $R^{12}$, $R^{13}$ unabhängig voneinander jeweils Methyl oder Ethyl sind; Y Sauerstoff oder $NR^{16}$ ist, worin $R^{16}$ Wasserstoff, Methyl oder Ethyl ist, $R^7$ entweder eine Alkylgruppe mit 1 bis etwa 3 Kohlenstoffatomen oder die Formel

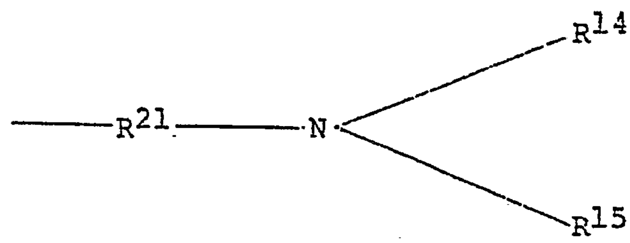

hat, worin $R^{14}$ und $R^{15}$ jeweils Methyl oder Ethyl sind und $R^{21}$ Methylen, Ethylen oder Trimethylen ist; $R^9$ Wasserstoff, eine Alkylgruppe mit 1 bis etwa 4 Kohlenstoffatomen oder eine substituierte Alkylgruppe mit 1 bis etwa 4 Kohlenstoffatomen ist, die eine Hydroxylgruppe, Carboxylgruppe oder $-SO_3J$-Gruppe enthält, in der J Wasserstoff, Natrium, Kalium oder die Gruppe

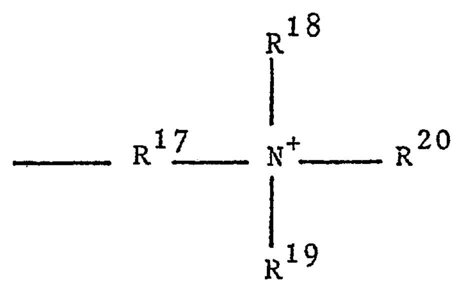

ist, worin $R^{17}$ Methylen, Ethylen oder Trimethylen ist und $R^{18}$, $R^{19}$, $R^{20}$ unabhängig voneinander Methyl oder Ethyl sind; Z Sauerstoff oder NH ist, wobei, wenn Z Sauerstoff ist, $R^9$ weiterhin Natrium oder Kalium sein kann, $A^-$ Chlorid, Bromid, Jodid, Methylsulfat oder Sulfat ist, m eine ganze Zahl gleich der Zahl von Anionen ist, die zur Aufrechterhaltung der elektronischen Neutralität erforderlich sind, n, r und s ganze Zahlen sind, deren Summe der Gesamtzahl an strukturellen Repetiereinheiten in dem Copolymeren gleich ist, die für ein Molekulargewicht im Bereich von etwa 50 000 bis etwa 1 000 000 erforderlich ist, und die strukturelle Repetiereinheit I im Bereich von etwa 25 bis etwa 95 Molprozent, die strukturelle Repetiereinheit II im Bereich von etwa 5 bis etwa 75 Molprozent und die strukturelle Repetiereinheit III im Bereich von etwa 0 bis etwa 35 Molprozent in dem Copolymeren enthalten sind.

2. Verfahren nach Anspruch 1, dadurch gekennzeichnet, daß die durchlässige Struktur eine unterirdische Formation ist.

3. Verfahren nach Anspruch 1 oder 2, gekennzeichnet durch ein Copolymer der Formel

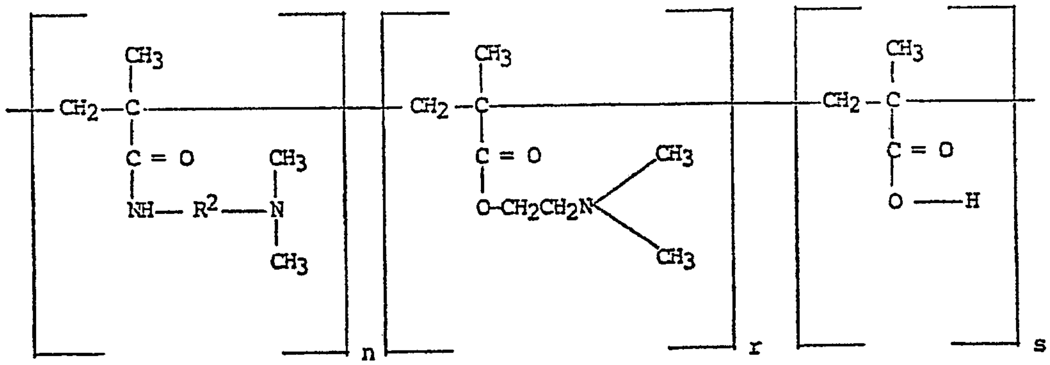

I II III

in der $R^2$ Methylen oder Ethylen ist und n, r und s wie in Anspruch 1 definiert sind, oder der Formel

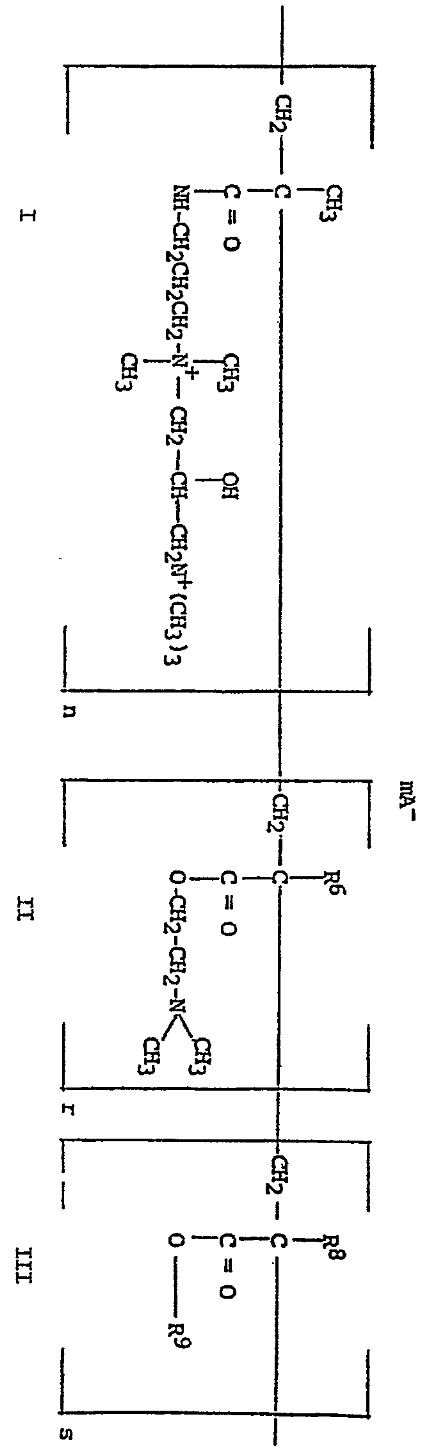

in der $R^6$ und $R^8$ unabhängig voneinander jeweils Wasserstoff oder Methyl, $R^9$ Wasserstoff oder Natrium und $A^-$, m, n, r und s wie in Anspruch 1 definiert sind.

4. Verfahren nach Anspruch 1 oder 2, dadurch gekennzeichnet, daß die strukturelle Repetiereinheit I von Dimethylaminoethylmethacrylat, dem Methylchloridsalz von Dimethylaminoethylmethacrylat oder Methacrylamido-4,8-diaza-4,4,8,8-tetramethyl-6-hydroxynonamethylendichlorid abgeleitet ist.

5. Verfahren nach Anspruch 1, 2 oder 4, dadurch gekennzeichnet, daß die strukturelle Repetiereinheit II von Dimethylaminoethylmethacrylat, Dimethylaminopropylmethacrylamid, Dimethylamidopropylmethylacrylamid oder Dimethylacrylamid abgeleitet ist.

6. Verfahren nach Anspruch 1, 2, 4 oder 5, dadurch gekennzeichnet, daß die strukturelle Repetiereinheit III von Methacrylsäure oder 2-Acrylamido-2-methylpropansulfonsäure abgeleitet ist.

7. Verfahren nach Anspruch 1 oder 2, dadurch gekennzeichnet, daß das organische Copolymere die Formel

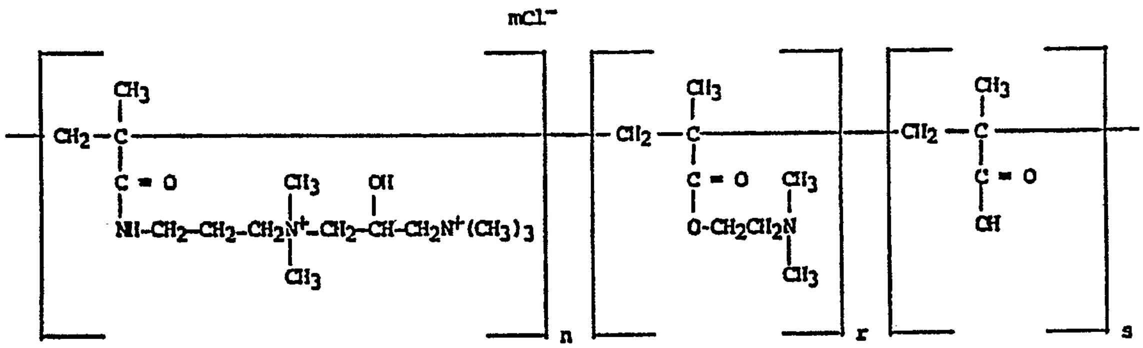

I II III

oder

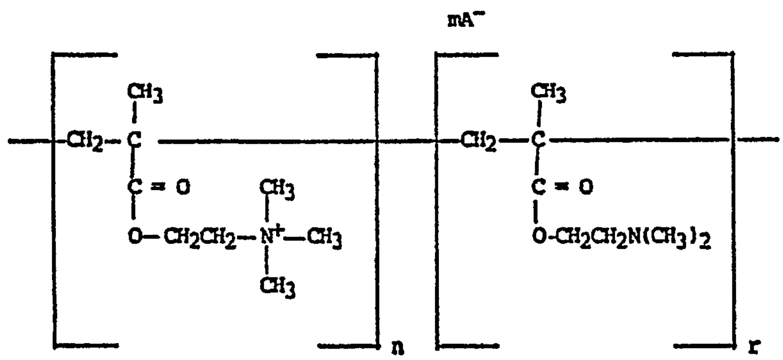

I II

worin A- Chlorid oder Methylsulfat ist,
oder

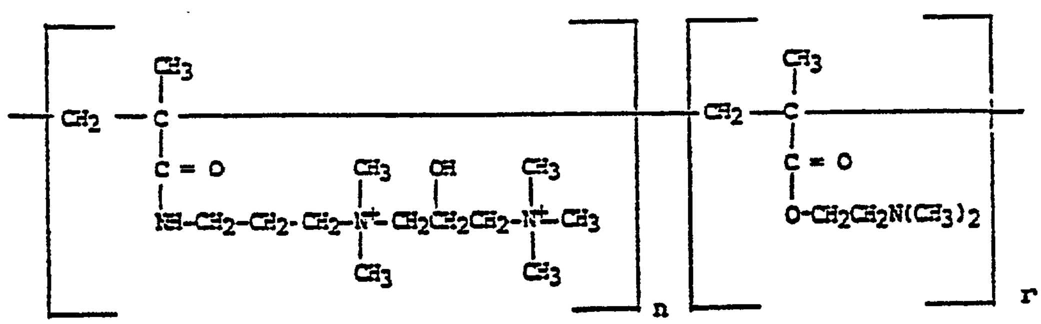

I II

hat, worin n, r und s wie in Anspruch 1 definiert sind,
oder eine Mischung von zwei oder mehr dieser Copolymeren ist.

8. Verfahren nach einem der Ansprüche 1 bis 6, dadurch gekennzeichnet, daß das Molekulargewicht im Bereich von etwa 100 000 bis etwa 400 000 liegt und daß die strukturelle Repetiereinheit I in einer Menge von etwa 70 Molprozent, die strukturelle Repetiereinheit II in einer Menge von etwa 27 Molprozent

und die strukturelle Repetiereinheit III in einer Menge von etwa 3 Molprozent in dem Copolymeren enthalten sind.

9. Verfahren nach einem der Ansprüche 1 bis 8, dadurch gekennzeichnet, daß das Copolymere in einem Trägerfluid verteilt ist.

10. Verfahren nach Anspruch 9, dadurch gekennzeichnet, daß das Trägerfluid von etwa 0,1 bis etwa 40,0 Gew.-% eines oder mehrerer Salze enthält, die aus den Alkalimetallhalogeniden, Erdalkalimetallhalogeniden, Ammoniumhalogeniden oder deren Mischungen ausgewählt sind, und daß das Copolymere in dem Trägerfluid in einer Menge von etwa 0,01 Gew.-% bis etwa 5,0 Gew.-%, bezogen auf das Gewicht des Trägerfluids, vorhanden ist.

**Revendications**

1. Procédé d'empêchement ou de réduction de la migration de fines dans une structure perméable, lequel procédé comprend la mise en contact desdites fines dans ladite structure perméable avec une quantité efficace d'un copolymère organique comportant des motifs monomères répétitifs en séquence désordonnée de formule:

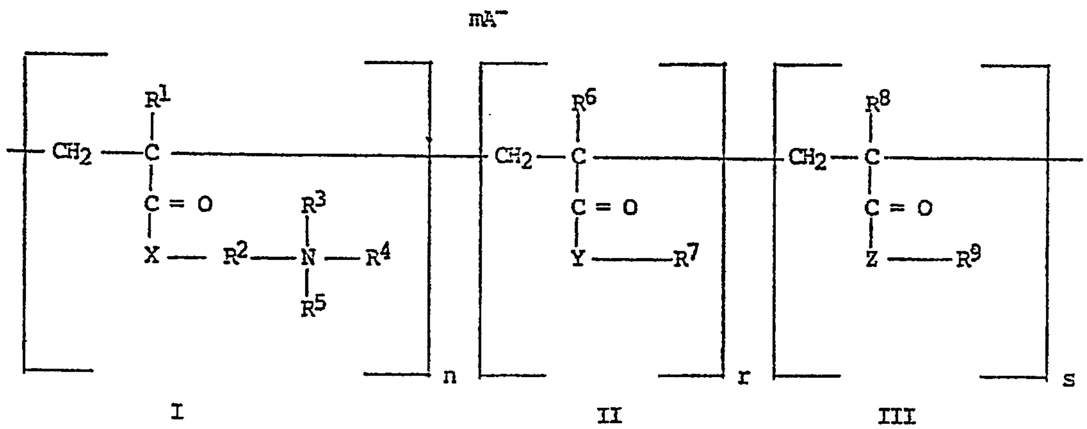

dans laquelle chaque radical X est indépendamment un atome d'oxygène ou NH; $R^1$, $R^6$ et $R^8$ sont chacun, indépendamment, un atome d'hydrogène ou un groupe méthyle; $R^2$ est un groupe alkylène ayant de 1 à environ 4 atomes de carbone; $R^3$ et $R^5$ sont chacun, indépendamment, un radical méthyle ou éthyle; $R^4$ est éventuellement présent et, lorsqu'il est présent, est soit un groupe alkyle ayant de 1 à envrion 6 atomes de carbone, soit un groupe ammonium quaternaire de formule générale:

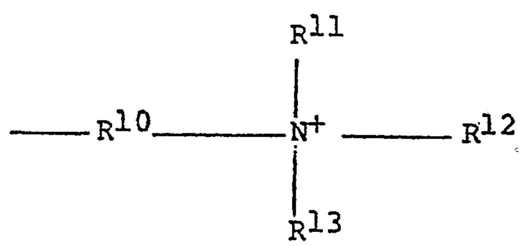

dans laquelle $R^{10}$ est un groupe alkylène ayant d'environ 2 à environ 6 atomes de carbone, ou un groupe alkylène substitué ayant d'environ 2 à environ 6 atomes de carbone et contenant un groupe hydroxy ou d'environ 1 à environ 3 groupes éther; et $R^{11}$, $R^{12}$ et $R^{13}$ sont chacun, indépendamment, un groupe méthyle ou éthyle; Y est un atome d'oxygène ou $NR^{16}$, $R^{16}$ étant un atome d'hydrogène ou un groupe méthyle ou éthyle; $R^7$ est soit un groupe alkyle ayant de 1 à environ 3 atomes de carbone, soit correspond à la formule:

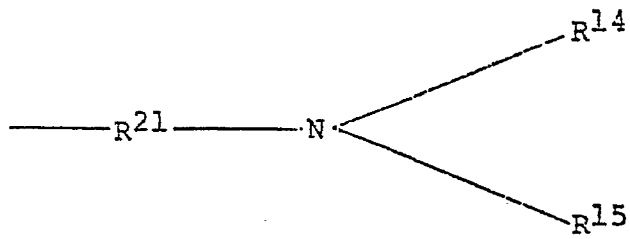

dans laquelle $R^{14}$ et $R^{15}$ sont chacun un groupe méthyle ou éthyle, et $R^{21}$ est un groupe méthylène, éthylène ou triméthylène; $R^9$ est un atome d'hydrogène ou un groupe alkyle contenant de 1 à environ 4 atomes de carbone, un groupe alkyle substitué ayant de 1 à environ 4 atomes de carbone et contenant un groupe hydroxy, un groupe carboxy ou $-SO_3J$, J étant un atome d'hydrogène, de sodium ou de potassium, ou le groupe:

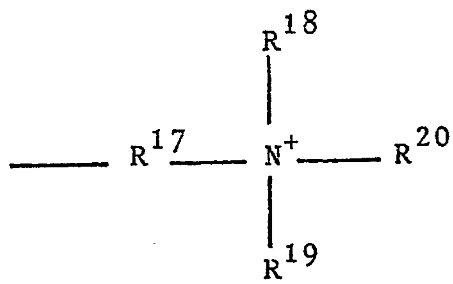

dans lequel $R^{17}$ est un groupe méthylène, éthylène ou triméthylène; et $R^{18}$, $R^{19}$ et $R^{20}$ sont chacun, indépendamment, un groupe méthyle ou éthyle; Z est un atome d'oxygène ou NH, étant entendu que lorsque Z est un atome d'oxygène, $R^9$ peut en outre être un atome de sodium ou de potassium; A est un anion chlorure, bromure, iodure, méthylsulfate ou sulfate; m est un nombre entier égal au nombre d'anions requis pour maintenir la neutralité électronique; n, r et s sont des nombres entiers dont la somme est égale au nombre total de motifs monomères dans le copolymère, requis pour donner un poids moléculaire dans la plage d'environ 50 000 à environ 1 000 000, et le motif monomère I est présent dans la plage d'environ 25 à environ 95% en mole dans le copolymère; le motif monomère II est présent dans la plage d'environ 5 à environ 75% en mole du copolymère; et le motif monomère III est présent dans la plage d'environ 0 à environ 35% en mole du copolymère.

2. Procédé selon la revendication 1, dans lequel ladite structure perméable est une formation souterraine.

3. Procédé selon la revendication 1 ou 2, dans lequel ledit copolymère correspond soit à la formule:

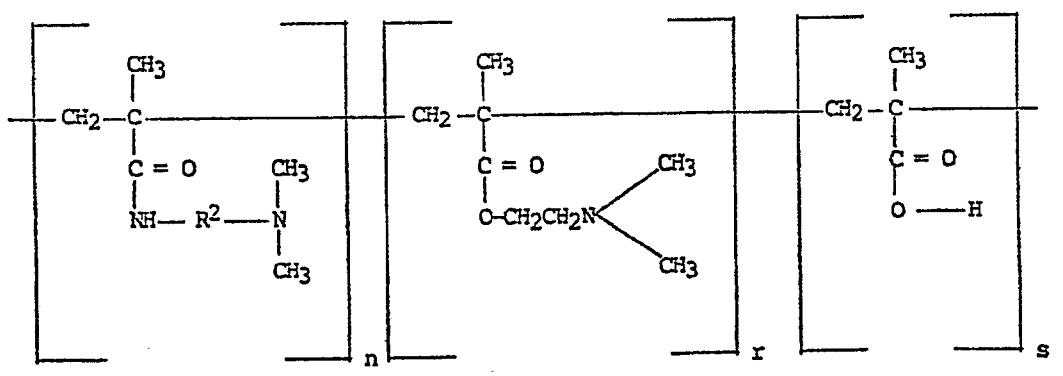

I II III

dans laquelle $R^2$ est un groupe éthylène ou méthylène, et n, r et s sont tels que définis dans la revendication 1; ou à la formule

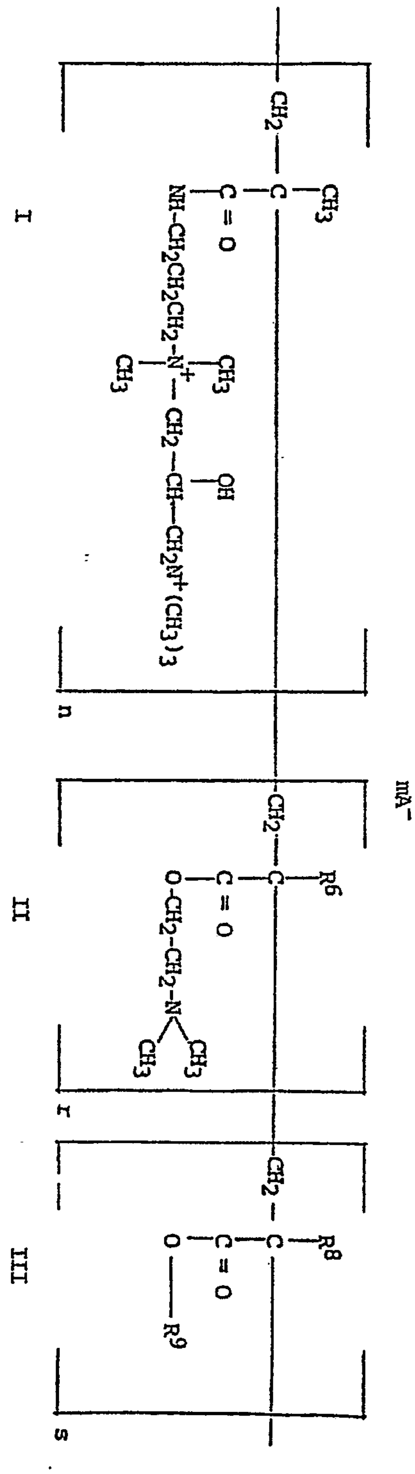

dans laquelle $R^6$ et $R^8$ sont chacun, indépendamment, un atome d'hydrogène ou le groupe méthyle; $R^9$ est un atome d'hydrogène ou de sodium; et A, m, n, r et s sont tels que définis dans la revendication 1.

4. Procédé selon la revendication 1 ou 2, dans lequel le motif monomère 1 est dérivé du méthacrylate de diméthylaminoéthyle, du méthylchlorure de méthacrylate de diméthylaminoéthyle ou du dichlorure de méthacrylamido-4,8-diaza-4,4,8,8-tétraméthyl-6-hydroxynonaméthylène.

5. Procédé selon la revendication 1, 2 ou 4, dans lequel le motif monomère II est dérivé du méthacrylate de diméthylaminoéthyle, du diméthylaminopropyl-méthacrylamide, du diméthylamidopropyl-méthacrylamide ou du diméthylacrylamide.

6. Procédé selon la revendication 1, 2, 4 ou 5, dans lequel le motif monomère III est dérivé de l'acide méthacrylique ou de l'acide 2-acrylamido-2-méthylpropanesulfonique.

7. Procédé selon la revendication 1 ou 2, dans lequel le copolymère organique correspond à la formule:

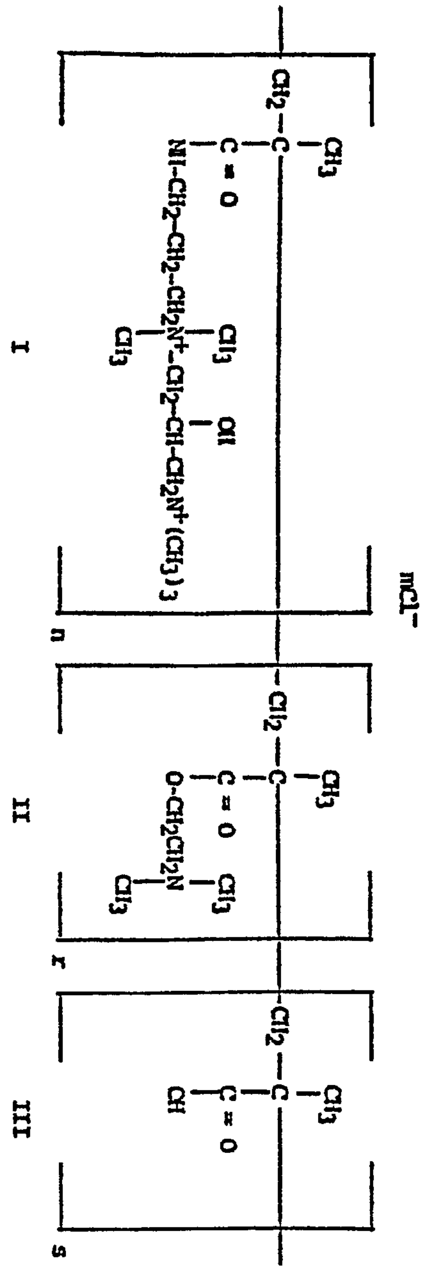

ou

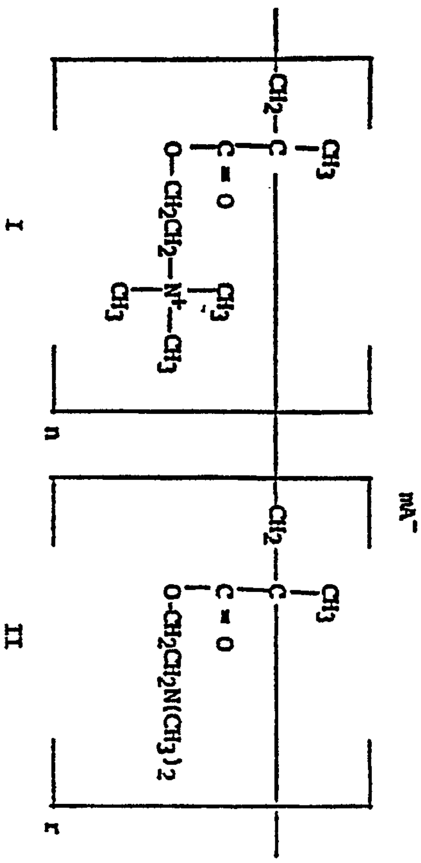

dans laquelle A est l'anion chlorure ou méthylsulfate; ou

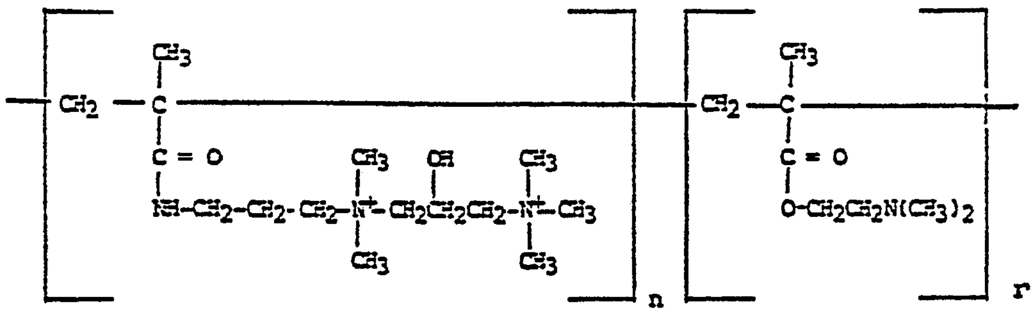

I

II

n, p et s dans les formules étant tels que définis dans la revendication 1; ou un mélange de quelconque de deux de ceux-ci ou plus.

8. Procédé selon l'une quelconque des revendications 1 à 6, dans lequel ledit poids moléculaire est dans la plage d'environ 100 000 à environ 400 000, et le motif monomère I est présent en une quantité d'environ 70% en mole du copolymère, le motif monomère II est présent en une quantité d'environ 27% en mole du copolymère, et le motif monomère III est présent en une quantité d'environ 3% en mole du copolymère.

9. Procédé selon l'une quelconque des revendications 1 à 8, dans lequel ledit copolymère est dispersé dans un fluide porteur.

10. Procédé selon la revendication 9, dans lequel ledit fluide porteur comprend d'environ 0,1 à environ 40,0% en poids d'un ou plusieurs sels, choisis parmi des halogénures de métaux alcalins, des halogénures de métaux alcalinoterreux, des halogénures d'ammonium et des mélanges de ceux-ci; le copolymère étant présent dans ledit fluide porteur en une quantité d'environ 0,01 à environ 5,0% en poids, par rapport au fluide porteur.